# EUROPÄISCHE PATENTSCHRIFT

(11) **EP 2 543 525 B1**
(45) Veröffentlichungstag und Bekanntmachung des Hinweises auf die Patenterteilung: **08.11.2017**
(21) Anmeldenummer: 12002017.7
(22) Anmeldetag: 21.03.2012
(51) Int. Cl.: B60D 1/60

(54) **ABDECKUNG FÜR EIN AN EINER FRONT- UND/ODER HECKSEITE EINES KRAFTFAHRZEUGS, INSBESONDERE EINES NUTZFAHRZEUGS, ANGEORDNETES SCHÄKEL**
COVER FOR A SHACKLE ATTACHED TO THE FRONT AND/OR REAR OF A MOTOR VEHICLE, IN PARTICULAR A COMMERCIAL VEHICLE
REVÊTEMENT POUR UNE MANILLE PLACÉE À L'AVANT ET/OU À L'ARRIÈRE D'UN VÉHICULE AUTOMOBILE, EN PARTICULIER D'UN VÉHICULE UTILITAIRE

(30) Priorität: 05.07.2011 AT 9842011
(43) Veröffentlichungstag der Anmeldung: 09.01.2013
(73) Patentinhaber: MAN Truck & Bus Österreich AG, 4400 Steyr (AT)
(72) Erfinder: Wittberger, Gerhard, 4523 Neuzeug (AT)
(74) Vertreter: Liebl, Thomas

(56) Entgegenhaltungen:
- DE-A1- 4 424 156
- DE-U1-202009 012 423
- US-A1- 2007 222 186

## Beschreibung

Die vorliegende Erfindung betrifft eine Abdeckung für ein an einer Front- oder Heckseite eines Kraftfahrzeugs, insbesondere eines Nutzfahrzeugs, angeordnetes Schäkel gemäß dem Oberbegriff des Patentanspruchs 1.

Durch die DE 10 2007 011 265 A1 ist eine Abdeckung an einem schwenkbar angelenkten Schäkel für ein Nutzfahrzeug bekannt, die sich aus zwei etwa becherförmigen Kappen aus Kunststoff zusammensetzt, die auf einen Schäkelbolzen beidseitig aufgesteckt sind. Vorteilhaft dabei ist es, dass der Schäkel zum Beispiel für eine Abschleppaktion unbehindert zugänglich ist. Das den Schäkelbolzen aufnehmende, rahmenfeste Befestigungsauge ist jedoch nicht abgedeckt und zudem Witterungseinflüssen ausgesetzt. Der Oberbegriff des Anspruchs 1 wird in der DE 44 24 156 A1 gezeigt.

Aufgabe der Erfindung ist es, eine in der Schutzfunktion verbesserte Abdeckung vorzuschlagen, die fertigungstechnisch einfach und montagegünstig ausgeführt ist.

Die Lösung dieser Aufgabe gelingt mit den Merkmalen des Patentanspruchs 1. Vorteilhafte und besonders zweckmäßige Weiterbildungen der Erfindung sind in den Unteransprüchen angeführt.

Erfindungsgemäß wird vorgeschlagen, dass die Abdeckung schalenförmig das Befestigungsauge, den Schäkelbolzen und das Schäkel umschließt und durch eine federnde Rastverbindung an der Schäkelaufnahme und/oder an dem Schäkel befestigt ist. Damit ist die Abdeckung einteilig ausgeführt und durch die Rastverbindung einfach montierbar; bei Einsatz des Schäkels zum Beispiel für eine Abschleppaktion ist dieser problemlos durch Abziehen der Abdeckung in Betriebsstellung schwenkbar. Trotz einfacher Konfiguration der schalenförmigen Abdeckung ermöglicht diese eine verbesserte Schutzfunktion sowohl gegen Verletzungen von Personen (zum Beispiel Fußgängern), als auch eine verbesserte Schutzfunktion der Schäkelaufnahme gegen Witterungseinflüsse.

Eine besonders einfache Konstruktion der Abdeckung wird dadurch erzielt, dass an deren dem frei nach unten (in Hochachsenrichtung gesehen) abragenden Schäkel gegenüberliegenden Abschnitt zumindest ein Federelement befestigt ist, das die Schenkel des Schäkels im montierten Zustand hintergreift. Das Federelement kann dabei in konstruktiv einfacher Weise aus Federdrähten oder Blattfedern gebildet sein.

Des Weiteren kann die Abdeckung aus Kunststoff und/oder aus Metall gefertigt sein. Alternativ oder zusätzlich kann das Federelement in die Abdeckung integriert, insbesondere beim Fertigungsvorgang aus Kunststoff mit eingespritzt sein.

Das Federelement kann bevorzugt einen Basisabschnitt aufweisen, von dem ein nach unten abragender Arm das Schäkelmittelteil formschlüssig hintergreift und/oder mehrere insbesondere zwei zum Schäkel abragende Arme federnd nachgiebig die Schenkel des Schäkels umfassen. Die Abdeckung kann dann besonders montagegünstig in einer Kippbewegung erst mit dem nach unten abragenden Arm in den Schäkel eingefädelt und dann auf diesen aufgeclipst bzw. mit diesem verrastet werden. Die Demontage erfolgt in umgekehrter Reihenfolge.

Besonders zweckmäßig kann ferner zumindest der obere, das Befestigungsauge und den Schäkelbolzen umschließende Abschnitt der Abdeckung relativ eng (Spaltabstand oder Anlageverbindung) an die Außenhaut der Aufbaustruktur angrenzen, um die Schutzfunktion zu erhöhen und zudem eine ästhetisch ansprechende Integration der Abdeckung in die Karosserieaußenform herzustellen.

Des Weiteren kann der obere, das Befestigungsauge und den Schäkelbolzen umschließende Abschnitt der Abdeckung nach innen zu eingezogene Wandabschnitte aufweisen, die zusätzlich zum Federelement mit dem Befestigungsauge und/oder den beidseitigen Enden des Schäkelbolzens federnd verrasten. Damit ist praktisch ohne Mehraufwand eine zusätzliche Festlegung der Abdeckung geschaffen.

Schließlich kann die Abdeckung in einer Draufsicht betrachtet V-förmig mit nach unten dem Schäkelmittelteil zu abnehmender Breite und/oder Tiefe ausgeführt sein, um damit neben der einfacheren Bauteilkonstruktion das Handling beim Abziehen der Abdeckung zu vereinfachen (besser zugängliche Angriffsfläche für eine Bedienungsperson).

Ein Ausführungsbeispiel der Erfindung ist anhand der beiliegenden, schematischen Zeichnung näher erläutert. Es zeigen:
Fig. 1 in einem senkrechten Längsschnitt entlang der Linie I - I der Fig. 2 ein schwenkbar an einer Schäkelaufnahme angelenktes Schäkel, das an der Frontseite eines Nutzfahrzeugs angeordnet und mit einer schalenförmigen Abdeckung versehen ist;
Fig. 2 das Schäkel mit Schäkelaufnahme und Abdeckung in einer Draufsicht gemäß Pfeil X der Fig. 1; und
Fig. 3 einen Schnitt gemäß Linie III - III der Fig. 2 durch das Schäkel und die über ein integriertes Federelement am Schäkel befestigte Abdeckung.

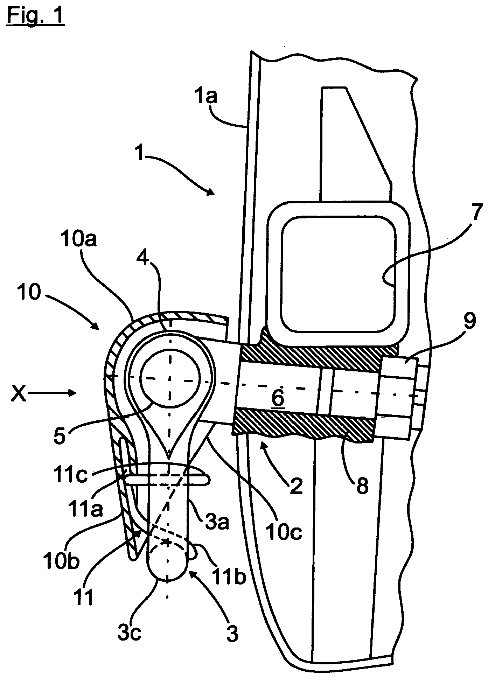

In der Fig. 1 ist in einen senkrechten Fahrzeug-Längsschnitt gemäß Linie I - I durch die Frontseite bzw. Aufbaustruktur 1 eines Nutzfahrzeugs im Bereich des Stoßfängermoduls eine Schäkelaufnahme 2 mit einem daran angelenkten Schäkel 3 dargestellt.

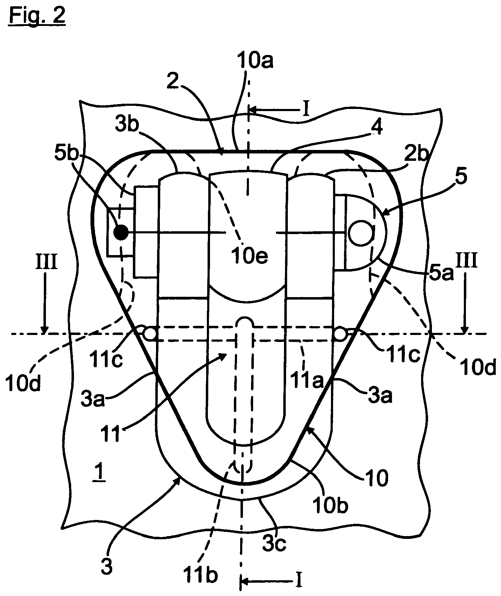

Die Schäkelaufnahme 2 setzt sich aus einem Befestigungsauge 4 (vergleiche auch Fig. 2), einem Schäkelbolzen 5 und einem mit dem Befestigungsauge 4 einstückig ausgeführten Ankerbolzen 6 zusammen, wobei der Ankerbolzen 6 in einer an einem Querträger 7 angeschweißten Tragbüchse 8 über eine Schraubverbindung 9 befestigt ist.

Das U- förmig gestaltete Schäkel 3 weist zwei an dessen Schenkel 3a angeformte Ösen 3b auf, über die das Schäkel 3 an dem das Befestigungsauge 4 und die Ösen 3b durchdringenden Schäkelbolzen 5 schwenkbar angelenkt ist. Der Schäkelbolzen 5 ist über einen angeformten Kopf 5a und ein Sicherungselement 5b axial gesichert.

Die nach vorne über die Außenhaut 1a der Aufbaustruktur 1 bzw. des Stoßfängermoduls vorragende Schäkelaufnahme 2 mit dem Schäkel 3 ist mittels einer schalenförmigen Abdeckung 10 aus Kunststoff abgedeckt.

Die Abdeckung 10 (Fig. 1) erstreckt sich in der Schnittansicht mit einem in Hochachsenrichtung oberen Abschnitt 10a kalottenförmig um das Befestigungsauge 4 herum und dann mit einem anschließenden, im Wesentlichen geradlinigen Abschnitt 10b in Hochachsenrichtung nach unten bis zum Schäkelmittelteil 3c.

Ferner sind die seitlichen Bereiche 10c der Abdeckung im oberen Abschnitt 10a und der obere Randbereich des Abschnitts 10a bis etwa zur Außenhaut 1a vorgezogen bzw. schließen relativ dicht an diese an und verlaufen dann in Hochachsenrichtung nach unten zu, wie ersichtlich ist mit abnehmender Tiefe bis zum unteren Randbereich der Abdeckung 10.

Wie die Fig. 2 in der Ansicht X der Fig. 1 zeigt, ist die Abdeckung 10 ferner etwa V-förmig ausgeführt, mit sich nach unten dem Schäkelmittelteil 3c zu vermindernder Breite.

Die Abdeckung 10 ist mittels eines aus zum Beispiel Federdraht hergestellten Federelements 11 an dem Schäkel 3 in einer federnden Rastverbindung gehalten. Das Federelement 11 (Fig. 1) weist dazu einen Basisabschnitt 11a auf, der in die Abdeckung 10 integriert bzw. bei deren Fertigung in Kunststoffspritztechnik mit eingespritzt ist. Der Basisabschnitt 11a könnte aber auch eingesteckt oder anderweitig an der Abdeckung 10 befestigt sein. Das Federelement 11 könnte alternativ auch aus Kunststoff bestehen und gegebenenfalls unmittelbar an die Abdeckung 10 angeformt sein.

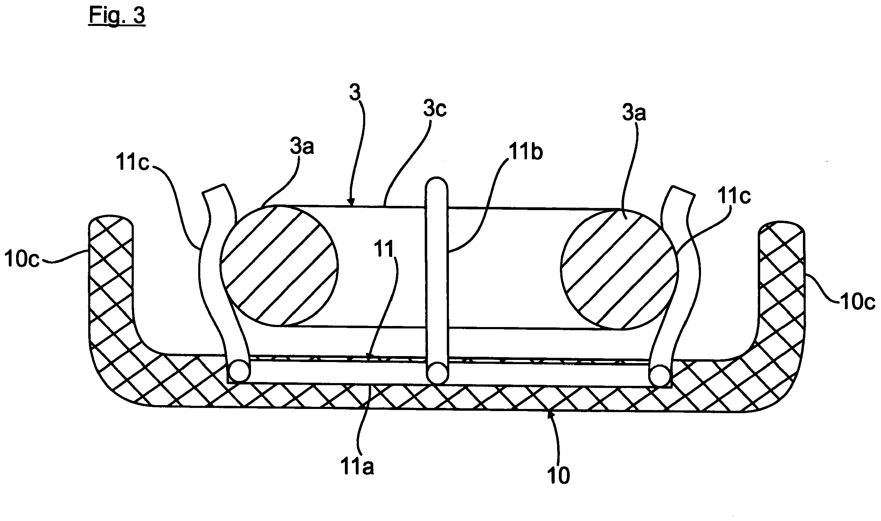

Von dem Basisabschnitt 11a des Federelements 11 ragt ein erster Arm 11b nach unten ab, der so geformt ist, dass er im montierten Zustand der Abdeckung 10 den unteren Schäkelmittelteil 3c (siehe Fig. 1) hintergreift. Ferner sind an den Basisabschnitt 11a des Federelements 11 (Fig. 3) zwei seitliche Arme 11b angeformt, die im montierten Zustand der Abdeckung 10 die Schenkel 3a des Schäkels 3 formschlüssig und mit federnder Vorspannung umfassen.

Zur Montage der Abdeckung 10 auf die Schäkelaufnahme 2 und das Schäkel 3 wird bei schräg angestellter Abdeckung 10 der untere Arm 11a des Federelements 11 in das Schäkel 3 bzw. dessen langlochförmige Öffnung eingefädelt und nach unten bewegt, bis der Arm 11a das Schäkelmittelteil 3c hintergreift. Dann wird die Abdeckung 10 derart in Richtung der Aufbaustruktur 1 verschwenkt, bis die Arme 11b des Federelements 11 die Schenkel 3a als Rastverbindung umgreifen (gemäß Fig. 3).

Gegebenenfalls kann auch im oberen Abschnitt 10a der Abdeckung 10 eine Rastverbindung vorgesehen sein, zum Beispiel durch an die Seitenbereiche 10c angeformte, elastische Wandabschnitte 10d (in Fig. 2 in gestrichelten Linien angedeutet), die im montierten Zustand den Schäkelbolzen 5 bzw. dessen beidseitige Endbereiche hintergreifen und/oder durch einen im oberen Randbereich angeformten, nach unten ragenden Wandabschnitt 10e, der zum Beispiel das Befestigungsauge 4 entsprechend hintergreift.

Die Abdeckung 10 kann gegebenenfalls auch aus einem anderen Material als Kunststoff gefertigt sein, zum Beispiel aus einem dünnwandigem Blech aus Leichtmetall. Auch das Federelement 11 kann modifiziert zum Beispiel als Blattfeder, etc. ausgeführt sein. Die Arme 11b des Federelements 11 können alternativ auch die Schenkel 3b des Schäkels 3 an deren Innenseite umfassen, also in deren langlöchförmige Öffnung einragen.

### BEZUGSZEICHENLISTE

- 1: Aufbaustruktur
- 1a: Außenhaut
- 2: Schäkelaufnahme
- 3: Schäkel
- 3a: Schenkel
- 3b: Ösen
- 3c: Schäkelmittelteil
- 4: Befestigungsauge
- 5: Schäkelbolzen
- 5a: Kopf
- 5b: Sicherungselement
- 6: Ankerbolzen
- 7: Querträger
- 8: Tragbüchse
- 9: Schraubverbindung
- 10: Abdeckung
- 10a: oberer Abschnitt
- 10b: unterer Abschnitt
- 10c: seitliche Bereiche
- 10d: Wandabschnitte
- 10g: Wandabschnitte
- 11: Federelement
- 11a: Basisabschnitt
- 11b: nach unten ragender Arm
- 11c: seitliche Arme

## Patentansprüche

1. Abdeckung mit einem Schäkel, das an einer Schäkelaufnahme mit einem vorstehenden Befestigungsauge und einem Schäkelbolzen schwenkbar gelagert ist, zur Anbringung an einer Front- und/oder Heckseite eines Kraftfahrzeugs, insbesondere eines Nutzfahrzeugs, **dadurch gekennzeichnet, dass** die Abdeckung (10) schalenförmig das Befestigungsauge (4), den Schäkelbolzen (5) und das Schäkel (3) umschließt und durch eine federnde Rastverbindung (11) an der Schäkelaufnahme (2) und/oder dem Schäkel (3) befestigt ist.

2. Abdeckung nach Anspruch 1, **dadurch gekennzeichnet, dass** an deren dem frei nach unten abragenden Schäkel (3) gegenüberliegenden Abschnitt (10b) der Abdeckung (10) zumindest ein Federelement (11) befestigt ist, dass die Schenkel (3a) des Schäkels (3) im montiertem Zustand hintergreift.

3. Abdeckung nach Anspruch 2, **dadurch gekennzeichnet, dass** die Abdeckung (10) aus Kunststoff und/oder Metall gefertigt ist und/oder dass das Federelement (11) in die Abdeckung (10) integriert ist.

4. Abdeckung nach Anspruch 3, **dadurch gekennzeichnet, dass** das Federelement (11) in Spritzgusstechnik in die aus Kunststoff hergestellte Abdeckung (10) eingespritzt ist.

5. Abdeckung nach einem der vorhergehenden Ansprüche, **dadurch gekennzeichnet, dass** das Federelement (11) einen Basisabschnitt (11a) aufweist, von dem ein nach unten abragender Arm (11b) ein Schäkelmittelteil (3c) formschlüssig hintergreift und/oder mehrere, insbesondere zwei zum Schäkel (3) abragende Arme (11c) federnd nachgiebig die Schenkel (3a) des Schäkels (3) umfassen.

6. Abdeckung nach einem der vorhergehenden Ansprüche, **dadurch gekennzeichnet, dass** zumindest der obere, das Befestigungsauge (4) und den Schäkelbolzen (5) umschließende Abschnitt (10a) der Abdeckung mit einem definierten Spaltabstand oder in einer Anlageverbindung an die Außenhaut (1a) der Aufbaustruktur (1) angrenzt.

7. Abdeckung nach einem der vorhergehenden Ansprüche, **dadurch gekennzeichnet, dass** der obere, das Befestigungsauge (4) und den Schäkelbolzen (5) umschließende Abschnitt (10a) nach innen zu eingezogene Wandabschnitte (10f, 10g) aufweist, die zusätzlich zum Federelement (11) mit dem Befestigungsauge (4) und/oder den beidseitigen Enden (5a, 5b) des Schäkelbolzens (5) federnd verrasten.

8. Abdeckung nach einem der vorhergehenden Ansprüche, **dadurch gekennzeichnet, dass** die Abdeckung in einer Draufsicht betrachtet V-förmig mit nach unten dem Schäkelmittelteil (3c) zu abnehmender Breite und/oder Tiefe ausgeführt ist.

## Claims

1. Covering with a shackle which is pivotably mounted on a shackle receptacle having a projecting fastening eye and a shackle bolt, for fitting to a front and/or rear side of a motor vehicle, in particular a commercial vehicle, **characterized in that** the covering (10) encloses, in the form of a shell, the fastening eye (4), the shackle bolt (5) and the shackle (3) and is fastened to the shackle retainer (2) and/or the shackle (3) by a resilient latching connection (11).

2. Covering according to Claim 1, **characterized in that**, on its portion (10b) of the covering (10) that is opposite the freely downwardly protruding shackle (3), there is fastened at least one spring element (11) which engages behind the legs (3a) of the shackle (3) in the mounted state.

3. Covering according to Claim 2, **characterized in that** the covering (10) is produced from plastic and/or metal and/or **in that** the spring element (11) is integrated into the covering (10).

4. Covering according to Claim 3, **characterized in that** the spring element (11) is injected by an injection-moulding technique into the covering (10) produced from plastic.

5. Covering according to one of the preceding claims, **characterized in that** the spring element (11) has a base portion (11a), of which a downwardly protruding arm (11b) positively engages behind a shackle central part (3c), and/or a plurality of, in particular two, arms (11c) which protrude with respect to the shackle (3) enclose the legs (3a) of the shackle (3) in a resiliently flexible manner.

6. Covering according to one of the preceding claims, **characterized in that** at least the upper portion (10a) of the covering that encloses the fastening eye (4) and the shackle bolt (5) adjoins the outer skin (1a) of the body structure (1) with a defined gap spacing or in a bearing connection.

7. Covering according to one of the preceding claims, **characterized in that** the upper portion (10a) enclosing the fastening eye (4) and the shackle bolt (5) has inwardly drawn-in wall portions (10f, 10g) which, in addition to the spring element (11), latch resiliently with the fastening eye (4) and/or the both ends (5a, 5b) of the shackle bolt (5).

8. Covering according to one of the preceding claims, **characterized in that** the covering is configured to be V-shaped as viewed in plan view with a width and/or depth which decreases downwardly towards the shackle central part (3c).

## Revendications

1. Recouvrement comprenant une manille qui est supportée de manière pivotante sur un logement de manille avec un oeillet de fixation saillant et un boulon de manille, pour le montage sur un côté avant et/ou arrière d'un véhicule automobile, en particulier d'un véhicule utilitaire, **caractérisé en ce que** le recouvrement (10) entoure sous forme de coque l'oeillet de fixation (4), le boulon de manille (5) et la manille (3) et est fixé au logement de manille (2) et/ou à la manille (3) par une connexion par encliquetage à ressort (11).

2. Recouvrement selon la revendication 1, **caractérisé en ce qu'**au niveau de sa portion (10b) de recouvrement (10) opposée à la manille (3) faisant saillie librement vers le bas, est fixé au moins un élément de ressort (11) qui vient en prise par l'arrière dans l'état monté avec la branche (3a) de la manille (3).

3. Recouvrement selon la revendication 2, **caractérisé en ce que** le recouvrement (10) est fabriqué en plastique et/ou en métal et/ou **en ce que** l'élément de ressort (11) est intégré dans le recouvrement (10).

4. Recouvrement selon la revendication 3, **caractérisé en ce que** l'élément de ressort (11) est incorporé par injection par une technique de moulage par injection dans le recouvrement (10) fabriqué en plastique.

5. Recouvrement selon l'une quelconque des revendications précédentes, **caractérisé en ce que** l'élément de ressort (11) présente une portion de base (11a), depuis laquelle un bras (11b) faisant saillie vers le bas vient en prise par l'arrière par engagement par correspondance de formes avec une partie centrale de manille (3c) et/ou plusieurs bras, en particulier deux bras (11c) faisant saillie par rapport à la manille (3), entourent de manière élastiquement flexible la branche (3a) de la manille (3).

6. Recouvrement selon l'une quelconque des revendications précédentes, **caractérisé en ce qu'**au moins la portion supérieure (10a) du recouvrement entourant l'oeillet de fixation (4) et le boulon de manille (5) est adjacente à la peau extérieure (1a) de la structure de carrosserie (1) avec une distance d'espacement définie ou suivant un assemblage en appui.

7. Recouvrement selon l'une quelconque des revendications précédentes, **caractérisé en ce que** la portion supérieure (10a) entourant l'oeillet de fixation (4) et le boulon de manille (5) présente des portions de paroi renfoncées vers l'intérieur (10f, 10g) qui s'encliquètent de manière élastique, en plus de l'élément de ressort (11), avec l'oeillet de fixation (4) et/ou les extrémités des deux côtés (5a, 5b) du boulon de manille (5).

8. Recouvrement selon l'une quelconque des revendications précédentes, **caractérisé en ce que** le recouvrement, vu de dessus, est réalisé en forme de V avec une largeur et/ou une profondeur diminuant vers le bas vers la partie centrale de manille (3c).
